# EUROPEAN PATENT SPECIFICATION

(11) **EP 2 740 331 B1**
(45) Date of publication and mention of the grant of the patent: **30.05.2018**
(21) Application number: 12741117.1
(22) Date of filing: 11.07.2012
(51) Int. Cl.: H05G 1/02, H05G 1/04

(54) **RADIATION GENERATING APPARATUS AND RADIATION IMAGING APPARATUS**
STRAHLUNGSERZEUGUNGSGERÄT UND STRAHLUNGSBILDGEBUNGSGERÄT
APPAREIL DE GÉNÉRATION DE RAYONNEMENT ET APPAREIL D'IMAGERIE PAR RAYONNEMENT

(30) Priority: 05.08.2011 JP 2011171610
(43) Date of publication of application: 11.06.2014
(73) Proprietor: Canon Kabushiki Kaisha, Tokyo 146-8501 (JP)
(72) Inventor: YANAGISAWA, Yoshihiro, Tokyo 146-8501 (JP); UEDA, Kazuyuki, Tokyo 146-8501 (JP); NOMURA, Ichiro, Tokyo 146-8501 (JP); TAMURA, Miki, Tokyo 146-8501 (JP); AOKI, Shuji, Tokyo 146-8501 (JP); SANDO, Kazuhiro, Tokyo 146-8501 (JP)
(74) Representative: TBK
(86) International application number: PCT/JP2012/068255
(87) International publication number: WO 2013/021794

(56) References cited:
- FR-A1- 2 415 876
- GB-A- 762 375
- US-A- 6 044 130

## Description

### Technical Field

The present invention relates to a radiation generating apparatus and a radiation imaging apparatus using the same that are applicable to medical apparatuses and non-destructive X-ray imaging in industrial apparatus fields.

### Background Art

In general, a radiation tube accelerates electrons emitted from an electron emitting source by a high voltage, and irradiates a target to thereby generate radiation, such as X-rays. The radiation generated at this time is emitted in all directions. JP 2007-265981 A discloses a transmission X-ray generating apparatus including an X-ray shielding member disposed on an electron incident side and an X-ray emitting side with respect to a target for shielding unnecessary X-rays.

It is required to apply a high voltage between the electron emitting source and the target to irradiate the target with a high energy electron beam, to generate radiation suitable for radiation imaging. However, in general, the radiation generation efficiency is significantly low, and about 99% of power consumption becomes heat. The generated heat elevates the temperature of the target, which necessitates a unit of preventing the target from being thermally damaged. JP 2004-235113 A discloses an X-ray generating tube that includes a cooling mechanism around an X-ray transmission window to thereby improve the heat radiation efficiency for the target portion.

FR 2 415 876 A1 discloses a multiple cathode X-ray tube for densitometers. This tube contains an anode assembly functioning by transmission, which is arranged along the sides of a regular convex polygon, with several cathodes, each of which sweeps one side of the polygon and a collimation device with several openings placed in front of the anode assembly to produce a series of fine, parallel and coplanar beams, the number of beams being equal to the number of openings. Such a tube makes very fast tomography possible.

GB 762 375 A discloses an X-ray generator which has a collimator 5 on the X-ray side of the target plate 4, and another collimator 14 on the electron beam side of the target; collimator 14 is of lead or heavy alloy, and has an aluminium shield or facing 15, with a flange 16 which makes good thermal contact with a copper tube 3. In the linear accelerator arrangement shown, the beam passes through the corrugated wave-guide 1 to strike the target. If the beam 9 is slightly displaced into position 10, such electrons as do not pass through the collimator bore 17 strike the aluminium facing, producing a minimum of scattered X-rays, which are largely absorbed by the block 14, so that they do not contribute to the main X-ray beam and upset its symmetry. The X-ray collimator has a conical bore 6, and may be water-cooled through a duct 7. The invention is applicable also to normal type X-ray generator tubes.

### Summary of Invention

### Technical Problem

In imaging with short time pulses and a large tube current in the medical field and imaging with a focused electron beam in the industrial field, the temperature of the target may be instantaneously increased. In such a case, heat radiation only through a conventional radiation shielding member is insufficient.

A heavy metal is typically adopted for the radiation shielding member. Accordingly, if the radiation shielding member is thickened to improve the heat radiation property, the entire weight of the radiation generating apparatus is increased. If the cooling mechanism is separately provided in addition to the radiation shielding member, it becomes difficult to downsize the entire radiation generating apparatus.

It is thus an object of the present invention to provide a radiation generating apparatus that can shield unnecessary radiation and cool a target with a simple structure while facilitating reduction in weight, and a radiation generating apparatus using the same.

### Solution to Problem

In order to achieve the object, a radiation generating apparatus according to claim 1 is provided which comprises: an envelope having a first window through which a radiation passes; and a radiation tube being held in the envelope and having a second window through which the radiation passes, wherein the first and second windows are arranged in opposition to each other. The radiation tube comprises: an electron emitting source arranged at an inside of the radiation tube; a target emitting a radiation in response to an irradiation with an electron emitted from the electron source; a substrate having a surface in opposition to the electron emitting source, wherein the target is formed on the surface, and the second window is formed in the substrate; and a radiation shielding member having a first shielding member with an electron beam passing hole in communication with the second window, and a second shielding member with a radiation passing hole in communication with the second window, wherein the first shielding member is configured to protrude from the second window toward the electron emitting source opposite to the to the second shielding member; the second shielding member is configured to protrude from the second window toward the first window; a thermal conductive member having a thermal conductivity higher than that of the radiation shielding member; and the thermal conductive member is connected at an outer periphery of the second shielding member of the radiation shielding member so as to encircle the second shielding member of the radiation shielding member.

### Advantageous Effect of Invention

The present invention can secure performance of shielding unnecessary radiation, and effectively radiate the heat of a target. Furthermore, the thermal conducting member having a lower density than the radiation shielding member is adopted. Accordingly, the entire weight of the radiation generating apparatus can be reduced. This configuration allows radiation imaging with a large tube current and a microfocus, and enables a high resolution taken image to be acquired. Moreover, reduction in size and weight facilitates application to home medical testing and emergency onsite medical testing.

Further features of the present invention will become apparent from the following description of exemplary embodiments with reference to the attached drawings.

### Brief Description of Drawings

[Fig. 1]Fig. 1 is a schematic sectional view illustrating a radiation generating apparatus of the present invention.
[Figs. 2A, 2B, 2C, 2D, 2E and 2F]Figs. 2A, 2B, 2C, 2D, 2E and 2F are a schematic sectional view illustrating a peripheral portion of a radiation shielding member according to one embodiment of the present invention.
[Fig. 3]Fig. 3 is a schematic sectional view illustrating a peripheral portion of a radiation shielding member according to another embodiment of the present invention.
[Fig. 4]Fig. 4 is a diagram of a configuration of a radiation imaging apparatus using the radiation generating apparatus of the present invention.

### Description of Embodiments

Embodiments of the present invention will hereinafter be described with reference to drawings.

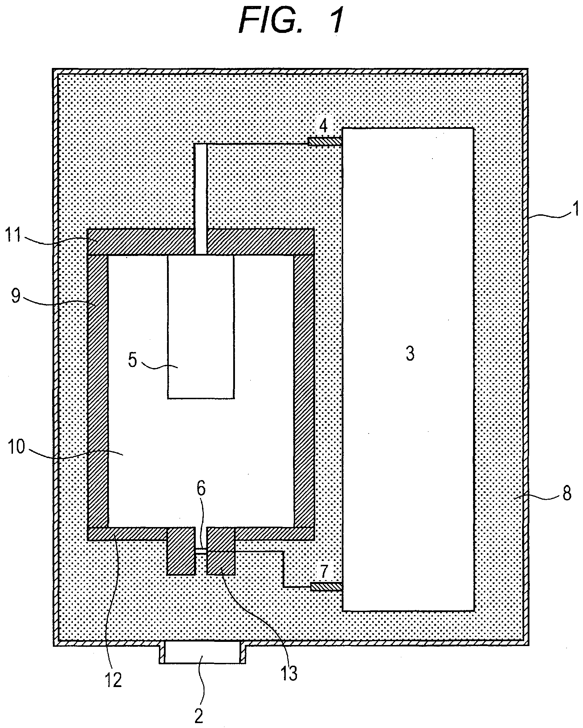

Fig. 1 is a schematic sectional view illustrating one embodiment of a radiation generating apparatus of the present invention. An envelope 1 accommodates a transmission radiation tube 10 and a voltage control unit 3 (voltage control unit). The rest of the space in the envelope 1 (between the inner walls of the envelope 1 and the radiation tube 10) is filled with an insulating fluid 8.

The voltage control unit 3 includes a circuit board and an insulated transformer, and outputs a signal for controlling occurrence of radiation to an electron emitting source 5 of the radiation tube 10 via a terminal 4. Furthermore, this unit defines the voltage of an anode portion 12 via the terminal 7.

The envelope 1 may have a strength sufficient for a container, and is made of one of a metal and a plastic material.

The insulating fluid 8 is one of a liquid and a gas that is electrically insulating and disposed as a cooling medium. In the case of a liquid, an electrically insulating oil is suitably used. Any of a mineral oil and a silicone oil is suitably used as an electrically insulating oil. Another usable insulating fluid 8 is a fluorinated electrically insulating liquid. In the case of a gas, an atmosphere can be used, thereby reducing the weight of the apparatus in comparison with an insulating liquid.

The envelope 1 is provided with a first window 2 through which radiation passes and which is for capturing the radiation at the outside. The radiation emitted from the radiation tube 10 is further emitted through the first window 2 to the outside. Any of glass, aluminum and beryllium is used for the first window 2.

The radiation tube 10 includes: a cylindrical evacuated container 9 as an outer frame; and an electron emitting source 5, a target assembly 6 and a window member 8 that are disposed therein.

The evacuated container 9 is for maintaining the inside of the radiation tube 10 to be evacuated. Any of insulating materials, such as glasses and ceramics, is adopted as the body. A cathode portion 11 and the anode portion 12 are made of a conductive alloy (kovar). The degree of vacuum in the evacuated container 9 may be about 10⁻⁴ to 10⁻⁸ Pa. A getter, not illustrated, may be arranged in the evacuated container 9 to maintain the degree of vacuum. The evacuated container 9 further includes a cylindrical aperture portion at the anode portion 12. A cylindrical window member 13 is coupled to the wall surface of the aperture portion. A cylindrical radiation passing hole (hereinafter simply referred to as the passing hole) 21, which allows a part of radiation (X-rays in this embodiment) generated from the target assembly 6 to pass, is formed in the window member 13. The cylindrical target assembly 6 is coupled to the inner wall of the passing hole 21, thereby allowing the evacuated container 9 to be sealed.

The electron emitting source 5 is disposed opposite to the target assembly 6 in the evacuated container 9. Any of hot cathodes, such as a tungsten filament and an impregnated cathode, and cold cathodes, such as carbon nanotubes, can be adopted for the electron emitting source 5. An extraction electrode is arranged at the electron emitting source 5. Electrons emitted by an electric field formed by the extraction electrode are converged by a lens electrode, and are incident on the target 6 to emit radiation. At this time, an acceleration voltage of about 40 to 120 kV is applied between the cathode portion 11 electrically connected to the electron emitting source 5 and the anode portion 12 electrically connected to the target 14; the voltage is different according to usage of the radiation.

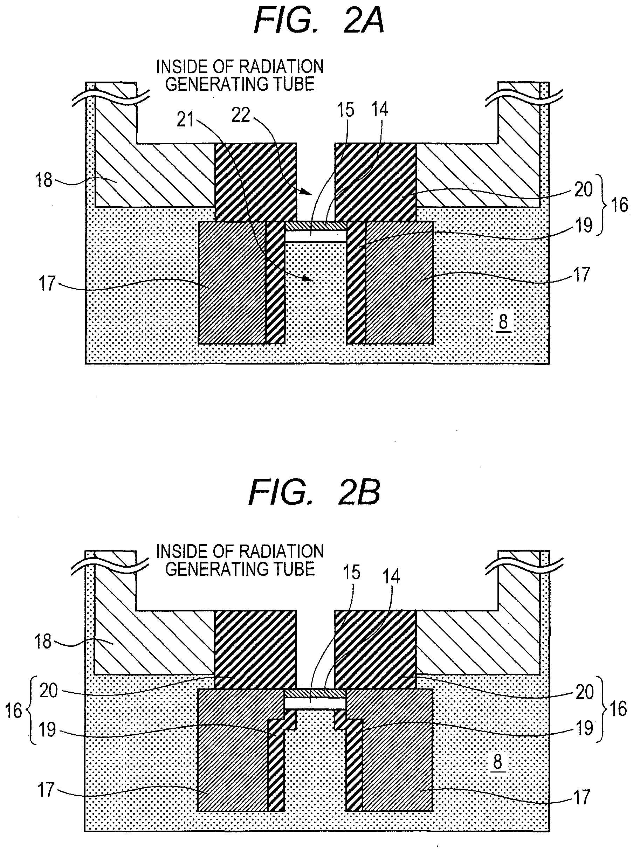

Figs. 2A to 2F are a schematic sectional view in which a peripheral portion of the window member 13 in Fig. 1 is enlarged.

The target assembly 6 includes the target 14, and a substrate 15 as a second window. The target 14 is disposed on a surface of the second window 15 on a side of the electron emitting source. A material having a high melting point and high radiation generation efficiency is suitable for the material configuring the target 14. For instance, any of tungsten, tantalum and molybdenum can be adopted. It is appropriate that the target 14 have a thickness of about from several micrometers to several tens of micrometers, to reduce absorption caused when the generated radiation passes through the target 14.

The second window 15 supports the target 14, allows at least a part of radiation generated by the target 14 to pass therethrough, and is disposed at a position in the radiation passing hole 21 in the window member 13, the position being opposite to the first window 2. A material that has a strength capable of supporting the target 14, a small amount of absorption of radiation generated in the target 14, and a high thermal conductivity for allowing heat generated at the target 14 to be quickly radiated is suitable for the material configuring the second window 15. For instance, any of diamond, silicon nitride and aluminum nitride can be adopted. To satisfy the requirements for the second window 15, the second window 15 suitably has a thickness of about 0.1 to several millimeters.

As illustrated in Fig. 2A, the window member 13 includes a radiation shielding member (hereinafter simply referred to as the shielding member) 16 and a thermal conducting member 17. The shielding member 16 has a passing hole 21 communicating with the second window 15, and shields unnecessary radiation among radiation emitted from the target 14. The shielding member 16 includes two shielding members (a first shielding member 20 and a second shielding member 19). The first shielding member 20 and the second shielding member 19 may be made of the same material; the shielding members may be formed in an integrated manner, or disposed separately. The shielding members may be made of respective different materials; the shielding members may be formed in an integrated manner, or disposed separately. The second window 15 is fixed to the shielding member 16, thereby allowing vacuum airtightness of the evacuated container 9 to be maintained. A silver brazing can be used for fixation according thereto.

The first shielding member 20 is disposed to protrude from the second window 15 toward the electron emitting source 5 (opposite to the second shielding member 19, which is described below) and forms an electron beam passing hole 22 communicating with the second window 15. Electrons emitted from the electron emitting source 5 pass through the electron beam passing hole 22 and collide with the target 14. Radiation scattered toward the electron emitting source from the target 14 among radiation having occurred at the target 14 is shielded by the first radiation shielding member 20.

The second shielding member 19 is disposed to protrude from the second window 15 toward the first window 2, and includes a passing hole 21 communicating with the second window 15. Radiation having passed through the second window 15 further passes through the passing hole 21. Unnecessary radiation is shielded by the second shielding member 19.

In view of taking as much radiation to the outside of the envelope 1 as possible, it is suitable that the opening area of the passing hole 21 gradually increase from the second window 15 toward the first window 2. This configuration is adopted because radiation passing through the second window 15 spreads radially.

It is appropriate that the center of the electron beam passing hole 22 of the first shielding member 20, the center of the passing hole 21 of the second shielding member 19 and the center of the target 14 be on the same line. This arrangement is adopted to allow more radiation generated by irradiating the transmission target 14 with electrons to be taken more securely.

A material having a high absorptance of radiation and a high thermal conductivity is suitably adopted as the material configuring the shielding member 16. For instance, any of metal materials, such as tungsten and tantalum and alloys thereof can be adopted. It is appropriate that the thicknesses of the first shielding member 20 and the second shielding member 19 be about 0.5 to 5 mm to sufficiently shield unnecessary radiation, even though the thicknesses depend on the set acceleration voltage for electrons.

As illustrated in Figs. 2A and 2B, the thermal conducting member 17 is arranged around the second shielding member 19 to encircle this second shielding member 19. The thermal conducting member 17 is coupled to the second shielding member 19 by any of brazing, molding, soldering, welding, laser welding, screwing, shrink fitting, taper fitting, adhesive, and mechanical screwing. The thermal conducting member 17 and the second shielding member 19 have concentric cylindrical shapes. The thermal conducting member 17 is larger in thickness in the radial direction than the second shielding member 19.

It is appropriate that the material configuring the thermal conducting member 17 have a higher thermal conductivity and higher heat resistance than the shielding member 16. Any of metal materials, carbon series materials and ceramics can be adopted. Any of silver, copper, aluminum, cobalt, nickel, iron, and alloys and oxides thereof may be adopted among metal materials. Any of diamond and graphite may be adopted among carbon series materials. Any of aluminum nitrides, silicon carbides, alumina, and silicon nitrides may be adopted among ceramics. Furthermore, it is appropriate that a material having a lower density than the radiation shielding member 16 be adopted as the material configuring the thermal conducting member 17.

In the case of adopting a material having a small density than the shielding member 16 is adopted as the thermal conducting member 17, the weight can be reduced in comparison with the case of a configuration where the window member 13 only including the shielding member 16.

Heat generated at the target 14 is conducted directly or via the second window 15 to the thermal conducting member 17, or conducted to the thermal conducting member 17 via the shielding member 16. The heat is further conducted to the insulating fluid in contact with the thermal conducting member 17 and quickly radiated, thereby suppressing increase in temperature of the target 14. The thermal conductivity of the thermal conducting member 17 is higher than the thermal conductivity of the shielding member 16. Accordingly, in the case where the window member 13 only includes the shielding member 16, the speed of heat radiation is increased.

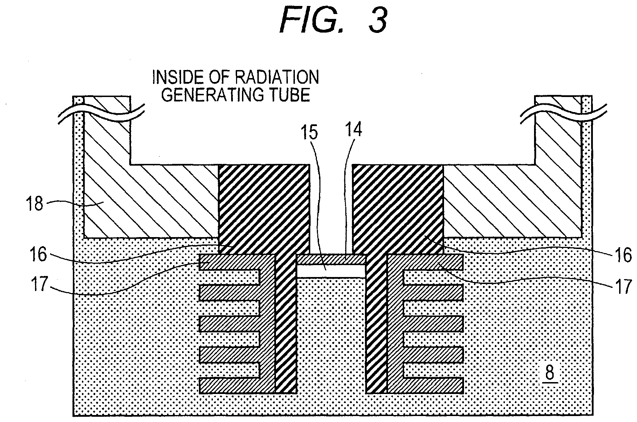

As further illustrated in Fig. 3, in the case where the thermal conducting member 17 has a fin structure, the area of the thermal conducting member 17 that is in contact with the insulating fluid is becomes large. Accordingly, the heat is radiated more effectively.

The thermal conducting member 17 may be partially disposed at the outer or inner periphery of the second shielding member 19, instead of being encircling the entire outer or inner periphery.

To improve the heat radiation property, the shielding member 16 and the thermal conducting member 17 are appropriately configured such that the target assembly 6 is disposed to protrude toward the first window 2 beyond the position of the end face of the evacuated container 9.

Any of anode grounding and midpoint grounding can be adopted as a scheme of applying an acceleration voltage. Anode grounding is a scheme of setting the potential of the target 14 as the anode to ground (0 [V]) while setting the potential of the electron emitting source 5 relative to ground to -Va [V], where the voltage applied between the target 14 and the electron emitting source 5 is Va [V]. Meanwhile, the midpoint grounding is a scheme of setting the potential of the target 14 relative to ground to +(Va - α) [V] while setting the potential of electron emitting source 5 relative to ground to -α [V] (note that Va > α > 0). The value of α is any value in an extent Va > α > 0. Typically, the value is close to Va/2. In the case of adopting the midpoint grounding, the absolute value of the potential relative to ground can be reduced, and the creepage distance can be shortened. Here, the creepage distance is the distance between the voltage control unit 3 and the envelope 1, and the distance between the radiation tube 10 and the envelope 1. If the creepage distance can be shortened, the size of the envelope 1 can be reduced. Accordingly, the weight of the insulating fluid 8 can be reduced according thereto, thereby allowing the size and weight of the radiation generating apparatus to be more reduced.

### Example 1

Tungsten is selected for the shielding member 16, into which the first shielding member 20 and the second shielding member 19 are formed in the integrated manner as illustrated in Fig. 2A. Copper is selected for the thermal conducting member 17. The thermal conducting member 17 is fixed by brazing to the outer periphery of a portion protruding from the second window 15 of the shielding member 16 toward the first window 2. An insulating oil made of a mineral oil is adopted as the insulating fluid 8. Midpoint grounding is used for voltage control. A tungsten filament is adopted as the electron emitting source 5, which is heated by a heating unit, not illustrated, to emit electrons. The emitted electrons are accelerated to a high energy, according to electron beam trajectory control by a potential distribution caused by a voltage applied to the extraction electrode and the lens electrode, and the voltage Va applied between the electron emitting source 5 and the target 14, thereby colliding with target and causing radiation. A thin film tungsten is adopted as the target 14. The voltage of the target 14 is set to +50 [kV] and the voltage of the electron emitting source 5 is set to -50 [kV] such that the extraction electrode is 50 [V], the lens electrode is 1000 [V] and the midpoint grounding is Va of 100 [kV].

### Example 2

As illustrated in Fig. 2B, in this example, the first shielding member 20 and the second shielding member 19 are disposed separately. The thermal conducting member 17 is disposed at an outer periphery of the second shielding member 19 such that a part of the thermal conducting member 17 is in directly contact with the second window 15. This example is similar in configuration to Example 1 except that a part of heat generated at the second window 15 is directly conducted to the thermal conducting member 17 without intervention of the first shielding member 20 and thereby the heat radiation speed is further increased.

### Example 3

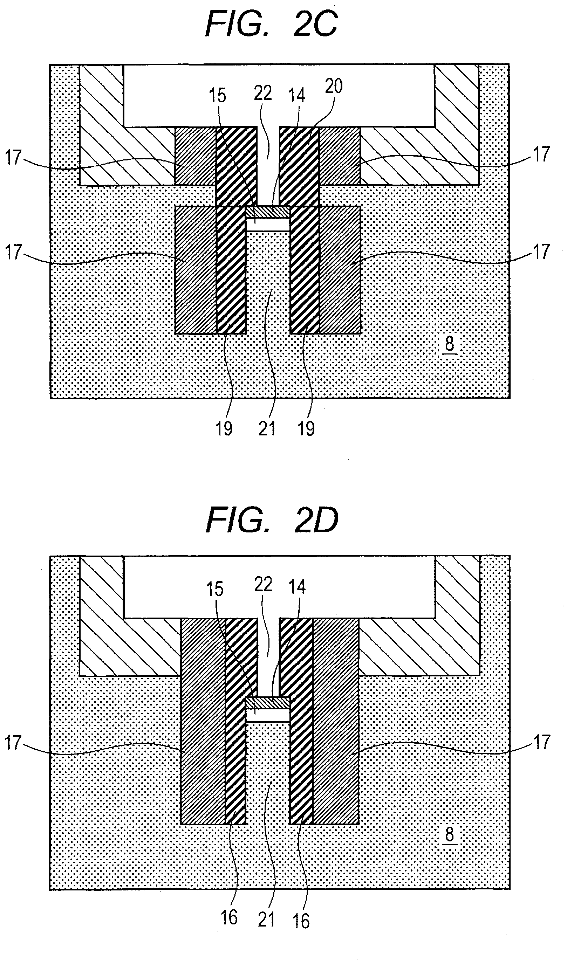

As illustrated in Fig. 2C, in this example, the thermal conducting member 17 is connected to a part of an outer periphery of a protrusion of the shielding member 16 and also provided between the wall surface of the aperture portion of the evacuated container 9 and the shielding member 16. This example is similar in configuration to Example 1 except for this point.

### Example 4

As illustrated in Fig. 2D, in this example, the thermal conducting member 17 is provided at the entire outer periphery of the shielding member 16. This example is similar in configuration to Example 1 except for this point.

### Example 5

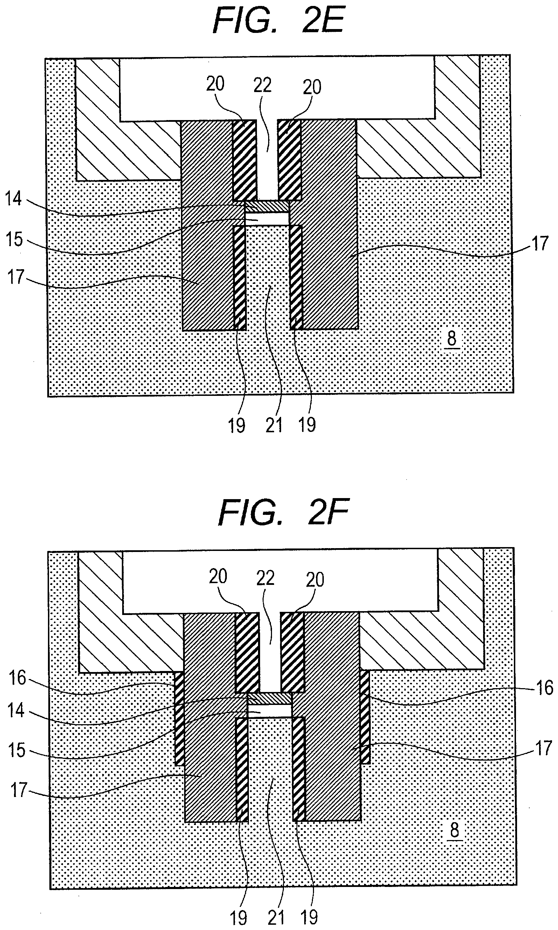

As illustrated in Fig. 2E, in this example, the thermal conducting member 17 is disposed at the entire outer periphery of the second shielding member 19 so as to be in direct contact with the second window 15. This example is similar in configuration to Example 2 except for this point.

### Example 6

As illustrated in Fig. 2F, in this example, the shielding member 16 is also disposed at a part that is an outer periphery of the thermal conducting member 17 and includes a position opposite to a position where the thermal conducting member 17 is in contact with the target 14. This example is similar in configuration to Example 5 except for this point. Radiation passing through the thermal conducting member 17 and scattered to the outside among radiation occurring at target 14 could be blocked. Accordingly, the performance of shielding unnecessary radiation can be further increased.

### Example 7

In this example is similar to Example 1 except that molybdenum is selected for the shielding member 16, aluminum is selected for the thermal conducting member 17, and a thin film molybdenum is adopted as the target 14. Note that this example is different from Example 1 in that anode grounding is used for voltage control. The voltage of the target 14 is set to +50 [kV] and the voltage of the electron emitting source 5 is set to 0 [kV] such that extraction electrode is 50 [V], the lens electrode is 3000 [V] and the anode grounding is Va of 50 [kV].

### Example 8

This example is similar to Example 1 except in that tungsten is selected for the shielding member 16, and one of SiC and graphite sheets is selected for the thermal conducting member 17.

### Example 9

This example is similar to Example 1 except that an alloy of tungsten and molybdenum (component ratio: tungsten 90%, molybdenum 10%) is selected for the shielding member 16, and an alloy of copper and aluminum (component ratio: copper 90%, aluminum 10%) is selected for the thermal conducting member 17.

### Example 10

This example is similar to Example 1 except that tungsten is selected for the shielding member 16 and copper having the fin shape illustrated in Fig. 3 is selected for the thermal conducting member 17.

Any of the examples can satisfactorily handle the radiation generating apparatus. Under the condition, radiation was emitted, and the dose of occurring radiation was measured. It was confirmed that a stable dose of radiation was acquired. In this case, unnecessary radiation did not leak, and the target was not damaged.

### Example 11

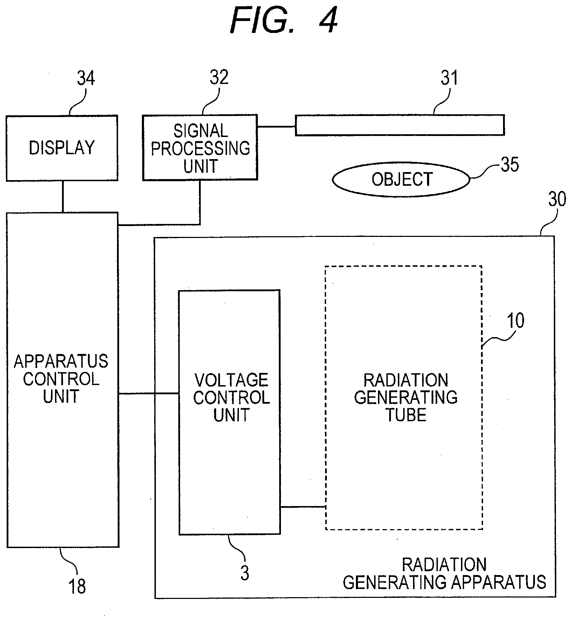

Next, referring to Fig. 4, a radiation imaging apparatus using the radiation generating apparatus of the present invention will now be described. The radiation imaging apparatus of this example includes a radiation generating apparatus 30, a radiation detector 31, a signal processing unit 32, an apparatus control unit 33 and a display 34. For instance, any of the radiation generating apparatuses in Example 1 to 10 is suitably adopted as the radiation generating apparatus 30. The radiation detector 31 is connected to the apparatus control unit 33 via the signal processing unit 32. The apparatus control unit 33 is connected to the display 34 and the voltage control unit 3. The process in the radiation generating apparatus 30 is integrally controlled by the apparatus control unit 33. The apparatus control unit 33 controls the radiation generating apparatus 30 and the radiation detector 31 so as to be correlated to each other. Radiation emitted from the radiation generating apparatus 30 passes through an object 35 and is detected by the radiation detector 31. A radiation transmission image of the object 35 is taken. The taken radiation transmission image is displayed on the display 34. The apparatus control unit 33 controls driving of the radiation generating apparatus 30, and controls, via the voltage control unit 3, a voltage signal to be applied to the radiation tube 10.

While the present invention has been described with reference to exemplary embodiments, it is to be understood that the invention is not limited to the disclosed exemplary embodiments.

## Claims

1. A radiation generating apparatus (30) comprising:
an envelope (1) having a first window (2) through which a radiation passes; and
a radiation tube (10) being held in the envelope (1) and having a second window (15) through which the radiation passes, wherein the first and second windows (2, 15) are arranged in opposition to each other, and wherein
the radiation tube (10) comprises:
an electron emitting source (5) arranged at an inside of the radiation tube;
a target (14) emitting a radiation in response to an irradiation with an electron emitted from the electron source;
a substrate (15) having a surface in opposition to the electron emitting source, wherein the target (15) is formed on the surface, and the second window (15) is formed in the substrate (15); and
a radiation shielding member (16) having a first shielding member (20) with an electron beam passing hole (22) in communication with the second window (15), and a second shielding member (19) with a radiation passing hole (21) in communication with the second window, wherein
the first shielding member (20) is configured to protrude from the second window (15) toward the electron emitting source (5) opposite to the second shielding member (19);
the second shielding member (19) is configured to protrude from the second window (15) toward the first window (2);
a thermal conductive member (17) having a thermal conductivity higher than that of the radiation shielding member (16); and
the thermal conductive member (17) is connected at an outer periphery of the second shielding member (19) of the radiation shielding member (16) so as to encircle the second shielding member (19) of the radiation shielding member (16).

2. The radiation generating apparatus according to claim 1, wherein
the radiation shielding member (16) is arranged at an aperture portion of an evacuated container (9), which is an outer frame of the radiation tube (10), and
the thermal conductive member (17) is arranged also between a wall surface of the aperture portion and the radiation shielding member (16).

3. The radiation generating apparatus according to claim 1, wherein
the thermal conductive member is arranged at whole of an outer periphery of the second radiation shielding member (19).

4. The radiation generating apparatus according to any one of claims 1 to 3, wherein
an insulating fluid fills between the envelope (1) and the radiation tube (10).

5. The radiation generating apparatus according to any one of claims 1 to 3, wherein
the thermal conductive member (17) has a smaller density than that of the radiation shielding member (16).

6. The radiation generating apparatus according to any one of claims 1 to 3, wherein
the thermal conductive member (17) and the radiation shielding member (16) are shaped into concentric cylinders, and
the thermal conductive member (17) has a larger thickness in a radial direction than that of the radiation shielding member (16).

7. The radiation generating apparatus according to claim 4, wherein
the insulating fluid is an electrically insulating oil.

8. The radiation generating apparatus according to claim 1, wherein
the radiation shielding member (16) is connected to the second window (15) via a silver brazing.

9. The radiation generating apparatus according to claim 1, wherein
the thermal conductive member (17) contacts an outer periphery of the second window (15).

10. The radiation generating apparatus according to any one of claims 1 to 9, wherein
the thermal conductive member (17) and the radiation shielding member (16) are formed from metal or alloy materials different from each other.

11. The radiation generating apparatus according to any one of claims 1 to 9, wherein
the thermal conductive member (17) is a ceramic.

12. The radiation generating apparatus according to any one of claims 1 to 9, wherein
the thermal conductive member (17) has a fin structure.

13. The radiation generating apparatus according to any one of claims 1 to 9, wherein
the thermal conductive member (17) is formed from a carbon series material.

14. The radiation generating apparatus according to any one of claims 1 to 14, wherein
the target (14) and the radiation shielding member (16) are formed from tungsten, and the thermal conductive member (17) is formed from copper.

15. The radiation generating apparatus according to claim 1, wherein
the second window (15) is thermally in direct contact to the thermal conductive member (17).

16. The radiation generating apparatus according to claim 1, wherein
the thermal conductive member (17) is connected at an outer periphery of the first shielding member (20).

17. A radiation imaging apparatus comprising:
the radiation generating apparatus according to any one of claims 1 to 16; a radiation detector (31) for detecting a radiation emitted from the radiation generating apparatus and passing through an object; and
a controller (33) for controlling the radiation generating apparatus and the radiation detector, so as to be correlated to each other.

## Patentansprüche

1. Strahlungserzeugungsvorrichtung (30), die Folgendes aufweist:
eine Umhüllung (1) mit einem ersten Fenster (2), durch das eine Strahlung tritt; und
eine Strahlungsröhre (10), die in der Umhüllung (1) gehalten wird und ein zweites Fenster (15) hat, durch das die Strahlung tritt, wobei das erste und das zweite Fenster (2, 15) einander gegenüberliegend angeordnet sind, und
wobei
die Strahlungsröhre (10) Folgendes aufweist:
eine elektronenemittierende Quelle (5), die an einer Innenseite der Strahlungsröhre angeordnet ist;
ein Ziel (14), das eine Strahlung in Erwiderung auf eine Bestrahlung mit einem Elektron emittiert, das von der Elektronenquelle emittiert ist;
ein Substrat (15) mit einer Fläche gegenüberliegend zu der elektronenemittierenden Quelle, wobei das Ziel (15) auf der Oberfläche ausgebildet ist und das zweite Fenster (15) in dem Substrat (15) ausgebildet ist; und
ein Strahlungsabschirmbauteil (16) mit einem ersten Abschirmbauteil (20) mit einem Elektronenstrahlpassierloch (22) in Verbindung mit dem zweiten Fenster (15) und einem zweiten Abschirmbauteil (19) mit einem Strahlungspassierloch (21) in Verbindung mit dem zweiten Fenster,
wobei
das erste Abschirmbauteil (20) gestaltet ist, um von dem zweiten Fenster (15) zu der elektronenemittierenden Quelle (5) entgegengesetzt zu dem zweiten Abschirmbauteil (19) vorzuragen;
das zweite Abschirmbauteil (19) gestaltet ist, um von dem zweiten Fenster (15) zu dem ersten Fenster (2) hin vorzuragen;
ein thermisch leitfähiges Bauteil (17) mit einer Wärmeleitfähigkeit höher als jener des Strahlungsabschirmbauteils (16); und
das thermisch leitfähige Bauteil (17) an einem Außenumfang des zweiten Abschirmbauteils (19) des Strahlungsabschirmbauteils (16) angeschlossen ist, um das zweite Abschirmbauteil (19) des Strahlungsabschirmbauteils (16) zu umgeben.

2. Strahlungserzeugungsvorrichtung nach Anspruch 1, wobei
das Strahlungsabschirmbauteil (16) einem Öffnungsabschnitt eines evakuierten Behälters (9) angeordnet ist, der ein äußerer Rahmen der Strahlungsröhre (10) ist, und
das thermisch leitfähige Bauteil (17) außerdem zwischen einer Wandfläche des Öffnungsabschnitts und des Strahlungsabschirmbauteils (16) angeordnet ist.

3. Strahlungserzeugungsvorrichtung nach Anspruch 1, wobei
das thermisch leitfähige Bauteil an einer Gesamtheit eines Außenumfangs des zweiten Strahlungsabschirmbauteils (19) angeordnet ist.

4. Strahlungserzeugungsvorrichtung nach einem von Ansprüchen 1 bis 3, wobei
ein isolierendes Fluid zwischen die Umhüllung (1) und die Strahlungsröhre (10) gefüllt ist.

5. Strahlungserzeugungsvorrichtung nach einem von Ansprüchen 1 bis 3, wobei
das thermisch leitfähige Bauteil (17) eine kleinere Dichte als jene des Strahlungsabschirmbauteils (16) hat.

6. Strahlungserzeugungsvorrichtung nach einem von Ansprüchen 1 bis 3, wobei
das thermisch leitfähige Bauteil (17) und das Strahlungsabschirmbauteil (16) in konzentrischen Zylindern geformt sind, und
das thermisch leitfähige Bauteil (17) eine größere Dicke in einer radialen Richtung als jene des Strahlungsabschirmbauteils (16) hat.

7. Strahlungserzeugungsvorrichtung nach Anspruch 4, wobei das isolierende Fluid ein elektrisch isolierendes Öl ist.

8. Strahlungserzeugungsvorrichtung nach Anspruch 1, wobei
das Strahlungsabschirmbauteil (16) mit dem zweiten Fenster (15) über eine Silberhartlötung verbunden ist.

9. Strahlungserzeugungsvorrichtung nach Anspruch 1, wobei
das thermisch leitfähige Bauteil (17) einen Außenumfang des zweiten Fensters (15) berührt.

10. Strahlungserzeugungsvorrichtung nach einem von Ansprüchen 1 bis 9, wobei
das thermisch leitfähige Bauteil (17) und das Strahlungsabschirmbauteil (16) aus Metall oder Legierungsmaterialien ausgebildet sind, die voneinander verschieden sind.

11. Strahlungserzeugungsvorrichtung nach einem von Ansprüchen 1 bis 9, wobei
das thermisch leitfähige Bauteil (17) eine Keramik ist.

12. Strahlungserzeugungsvorrichtung nach einem von Ansprüchen 1 bis 9, wobei
das thermisch leitfähige Bauteil (17) eine Lamellenstruktur hat.

13. Strahlungserzeugungsvorrichtung nach einem von Ansprüchen 1 bis 9, wobei
das thermisch leitfähige Bauteil (17) aus einem Material der Kohlenstoffreihe ausgebildet ist.

14. Strahlungserzeugungsvorrichtung nach einem von Ansprüchen 1 bis 13, wobei
das Ziel (14) und das Strahlungsabschirmbauteil (16) aus Wolfram ausgebildet sind und das thermisch leitfähige Bauteil (17) aus Kupfer ausgebildet ist.

15. Strahlungserzeugungsvorrichtung nach Anspruch 1, wobei
das zweite Fenster (15) thermisch in direktem Kontakt mit dem thermisch leitfähigen Bauteil (17) ist.

16. Strahlungserzeugungsvorrichtung nach Anspruch 1, wobei
das thermisch leitfähige Bauteil (17) an einem Außenumfang des ersten Abschirmbauteils (20) angeschlossen ist.

17. Strahlungsabbildungsvorrichtung, die Folgendes aufweist:
die Strahlungserzeugungsvorrichtung nach einem von Ansprüchen 1 bis 16;
einen Strahlungsdetektor (31) zum Erfassen einer Strahlung, die von der Strahlungserzeugungsvorrichtung emittiert wird und durch ein Objekt hindurchtritt; und
ein Steuergerät (33) zum Steuern der Strahlungserzeugungsvorrichtung und des Strahlungsdetektors, um miteinander korreliert zu sein.

## Revendications

1. Appareil de génération de rayonnement (30) comprenant :
une enveloppe (1) comportant une première fenêtre (2) à travers laquelle un rayonnement passe ; et
un tube de rayonnement (10) maintenu dans l'enveloppe (1) et comportant une deuxième fenêtre (15) à travers laquelle le rayonnement passe, dans lequel les première et deuxième fenêtres (2, 15) sont agencées en opposition l'une à l'autre, et dans lequel
le tube de rayonnement (10) comprend :
une source d'émission d'électrons (5) agencée à l'intérieur du tube de rayonnement ;
une cible (14) émettant un rayonnement en réponse à une irradiation avec un électron émis à partir de la source d'électrons ;
un substrat (15) ayant une surface en opposition à la source d'émission d'électrons, dans lequel la cible (15) est formée sur la surface, et la deuxième fenêtre (15) est formée dans le substrat (15) ; et
un élément de protection contre les rayonnements (16) comportant un premier élément de protection (20) avec un orifice de passage de faisceau électronique (22) en communication avec la deuxième fenêtre (15), et un deuxième élément de protection (19) avec un orifice de passage de rayonnement (21) en communication avec la deuxième fenêtre, dans lequel
le premier élément de protection (20) est configuré pour faire saillie de la deuxième fenêtre (15) vers la source d'émission d'électrons (5) à l'opposé du deuxième élément de protection (19) ;
le deuxième élément de protection (19) est configuré pour faire saillie de la deuxième fenêtre (15) vers la première fenêtre (2) ;
un élément thermiquement conducteur (17) ayant une conductivité thermique supérieure à celle de l'élément de protection contre les rayonnements (16) ; et
l'élément thermiquement conducteur (17) est relié à une périphérie extérieure du deuxième élément de protection (19) de l'élément de protection contre les rayonnements (16) de manière à encercler le deuxième élément de protection (19) de l'élément de protection contre les rayonnements (16).

2. Appareil de génération de rayonnement selon la revendication 1, dans lequel
l'élément de protection contre les rayonnements (16) est agencé au niveau d'une partie d'ouverture d'un contenant sous vide (9), qui est un cadre extérieur du tube de rayonnement (10), et
l'élément thermiquement conducteur (17) est agencé également entre une surface de paroi de la partie d'ouverture et l'élément de protection contre les rayonnements (16).

3. Appareil de génération de rayonnement selon la revendication 1, dans lequel
l'élément thermiquement conducteur est agencé au niveau d'une périphérie extérieure entière du deuxième élément de protection contre les rayonnements (19).

4. Appareil de génération de rayonnement selon l'une quelconque des revendications 1 à 3, dans lequel
un fluide isolant remplit le volume entre l'enveloppe (1) et le tube de rayonnement (10).

5. Appareil de génération de rayonnement selon l'une quelconque des revendications 1 à 3, dans lequel
l'élément thermiquement conducteur (17) a une densité plus faible que celle de l'élément de protection contre les rayonnements (16).

6. Appareil de génération de rayonnement selon l'une quelconque des revendications 1 à 3, dans lequel
l'élément thermiquement conducteur (17) et l'élément de protection contre les rayonnements (16) ont la forme de cylindres concentriques, et
l'élément thermiquement conducteur (17) a une épaisseur dans une direction radiale plus grande que celle de l'élément de protection contre les rayonnements (16).

7. Appareil de génération de rayonnement selon la revendication 4, dans lequel le fluide isolant est une huile électriquement isolante.

8. Appareil de génération de rayonnement selon la revendication 1, dans lequel
l'élément de protection contre les rayonnements (16) est relié à la deuxième fenêtre (15) par un brasage à l'argent.

9. Appareil de génération de rayonnement selon la revendication 1, dans lequel
l'élément thermiquement conducteur (17) est en contact avec une périphérie extérieure de la deuxième fenêtre (15).

10. Appareil de génération de rayonnement selon l'une quelconque des revendications 1 à 9, dans lequel
l'élément thermiquement conducteur (17) et l'élément de protection contre les rayonnements (16) sont formés à partir de matériaux métalliques ou d'alliages différents l'un de l'autre.

11. Appareil de génération de rayonnement selon l'une quelconque des revendications 1 à 9, dans lequel
l'élément thermiquement conducteur (17) est une céramique.

12. Appareil de génération de rayonnement selon l'une quelconque des revendications 1 à 9, dans lequel
l'élément thermiquement conducteur (17) a une structure d'ailette.

13. Appareil de génération de rayonnement selon l'une quelconque des revendications 1 à 9, dans lequel
l'élément thermiquement conducteur (17) est formé à partir d'un matériau de la série du carbone.

14. Appareil de génération de rayonnement selon l'une quelconque des revendications 1 à 14, dans lequel
la cible (14) et l'élément de protection contre les rayonnements (16) sont formés à partir de tungstène, et l'élément thermiquement conducteur (17) est formé à partir de cuivre.

15. Appareil de génération de rayonnement selon la revendication 1, dans lequel
la deuxième fenêtre (15) est thermiquement en contact direct avec l'élément thermiquement conducteur (17).

16. Appareil de génération de rayonnement selon la revendication 1, dans lequel
l'élément thermiquement conducteur (17) est relié à une périphérie extérieure du premier élément de protection (20).

17. Appareil d'imagerie par rayonnement comprenant :
l'appareil de génération de rayonnement selon l'une quelconque des revendications 1 à 16 ;
un détecteur de rayonnement (31) pour détecter un rayonnement émis à partir de l'appareil de génération de rayonnement et passant à travers un objet ; et
un contrôleur (33) pour commander l'appareil de génération de rayonnement et le détecteur de rayonnement, de manière à ce qu'ils soient corrélés l'un avec l'autre.
